# EUROPEAN PATENT APPLICATION

(11) **EP 1 603 066 A1**
(43) Date of publication of application: **07.12.2005**
(21) Application number: 05104613.4
(22) Date of filing: 30.05.2005
(51) Int. Cl.: G06F 17/60

(54) **Email manager**

(30) Priority: 01.06.2004 US 858963
(71) Applicant: MICROSOFT CORPORATION, Redmond, Washington 98052-6399 (US)
(72) Inventor: Little II, Charles Reeves, Redmond, WA 98052 (US)
(74) Representative: Zimmer, Franz-Josef

(57) **Abstract**

An email manager for an inbox directs emails to various categories based on importance assigned by an email recipient and provides a user interface for presenting emails to the recipient in groups prioritized by importance. In one implementation importance is based on the sending source and in one implementation importance is based on content.

## Description

### TECHNICAL FIELD

The subject matter relates generally to electronic messaging and more specifically to an email manager.

### BACKGROUND

Executives, receptionists, and even home computer users may face several hundred new emails accrued in an inbox upon returning from an extended vacation or even an overnight absence. These computer users may also face hundreds of unopened emails if an active email address has fallen into the hands of spammers or unsolicited syndicated advertisers.

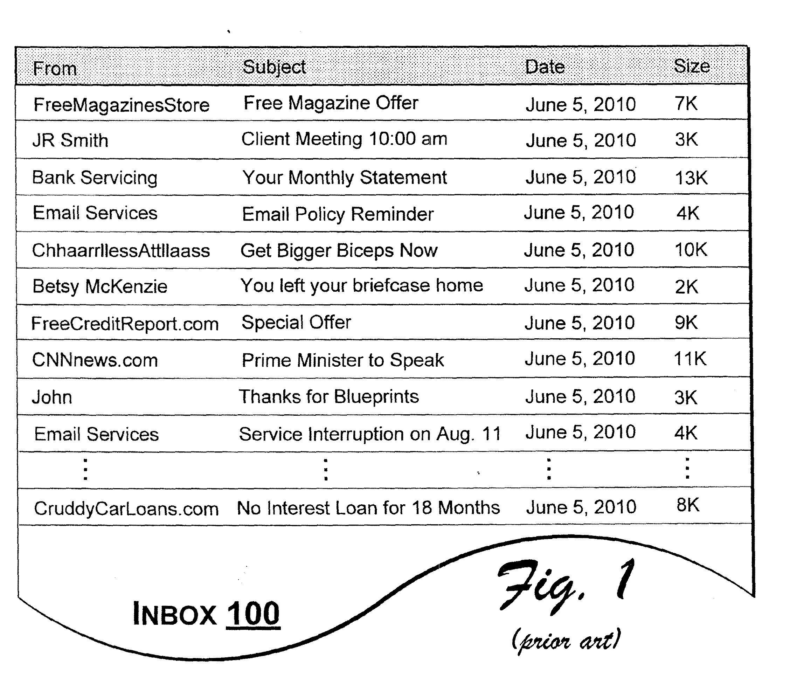

**Fig. 1** shows a typical conventional email inbox 100. Each unread email is represented in the inbox 100 as a single line of text that typically includes email sender, subject line, date, and size. The unread emails are conventionally presented in the inbox 100 as a random mixture of important emails, personal communications from friends, neutral messages from safe senders, articles, advertisements, and junk mail.

For many executives and receptionists, the volume of new emails received daily is so great that at times the deluge results in the human equivalent of a "denial of service" attack, in which the executive or receptionist is incapacitated from usual job duties by having to deal with email as a nearly full-time job. Often the mere sorting of the email takes a great deal of time, let alone answering the email.

Conventional spam filters may help some users who are overwhelmed with incoming email. But sometimes almost all of the received email is important, in which case a spam filter does not help. An overwhelmed user typically makes a manual first pass through new email attempting to pick out the most important items that should receive immediate attention and simultaneously sifting out irrelevant items with the delete key. Items of only intermediate importance, such as desirable but not urgent emails from an RSS news feed, are left alone. This human sorting process, however, is faulty.

If a very important email is found and given immediate attention, the interruption distracts and upsets the human process of prioritizing and triaging email according to its urgency. Further, the first impression of a newly received email is often based only on the subject line, and subject lines are often cryptic or misleading. An email entitled "your bank account" could be advertising or could be a bona fide notification of account status from a bank. Since almost every kind of information can now be sent via email, the problem of having to prioritize large volumes of incoming email increases.

### SUMMARY

Email management for an inbox directs emails to various categories based on importance assigned by an email recipient and provides a user interface for presenting emails to the recipient in groups prioritized by importance. Categorization can be based on variable criteria, such as importance of the sending entity and/or email content and/or similarity of content to a predetermined content.

In one implementation, an exemplary email manager may include a category generator to create importance categories. This allows a user to set up custom categories according to taste and assign custom priority to the categories. An email sorter assigns each received email to one of the importance categories using trainable filters. Since trainable filtering logic and dynamic rules can be used, an exemplary email manager can develop greater decision-making power and negotiate more difficult email categorizations as ongoing use proceeds. The user interface can provide a single-stop screen location to navigate between email in different importance categories.

### BRIEF DESCRIPTION OF THE DRAWINGS

Fig. 1 is a graphic representation of a conventional email inbox.

Fig. 2 is a block diagram of an exemplary email manager and a graphic representation of an exemplary user interface.

Fig. 3 is a block diagram of an exemplary email manager.

Fig. 4 is a graphic representation of a first state of an exemplary user interface.

Fig. 5 is a graphic representation of a second state of an exemplary user interface.

Fig. 6 is a graphic representation of a third state of an exemplary user interface.

Fig. 7 is a graphic representation of an exemplary alternative implementation of an email inbox generated by an exemplary email manager.

Fig. 8 is a flow diagram of an exemplary method of email management.

### DETAILED DESCRIPTION

Various email managers and related techniques presented herein apply computing power to the task of triaging and organizing email in an inbox, especially newly received, unread email messages (i.e., "emails" or just "mail"). As inboxes grow larger with an increasing volume of daily unread emails, tools are needed to enable users to quickly sort through and review their email. The exemplary email managers described herein assist these users in the task of finding and organizing valuable emails amidst "noise" created by grey mail and junk email in an inbox.

An exemplary email manager provides an interface tool that presents new email to a user in categories. In one implementation an exemplary email manager is a wizard-like tool that clears a displayed inbox, sub-divides a user's mail into categories, prioritizes the categories according to importance, and then displays the categories of email one at a time in order of importance to provide manageable segments. The importance of a category and thus the importance of individual emails can be assigned by the user, i.e., the recipient of the email, so that the recipient is not subject to the sender's conception of importance. An email that the sender designates "low importance" may be presented to the recipient in the highest importance category, and vice versa. By dividing a large inbox into smaller, logical groups the recipient is able to quickly review and process the mail. In one implementation, an email manager categorizes and prioritizes only newly received unread mail, while in other implementations an email manager processes an entire inbox.

In one implementation, priority of display is based on pre-established importance criteria as established beforehand by the recipient, for example, the importance of the sender, or the importance of certain content in a received email. Typical categories based on the importance of a sender may include: serious business mail, such as official email from an email service provider; mail from personal contacts, such as the members of one's address book; interesting mail from entities recognized as safe, i.e., mail sent from organizations the user has recognized as "safe" by adding the organizations to their safe list; mail set to discussion "mail" lists or pulled automatically via RSS news feeds or other aggregation services; and "other" mail including junk mail and spam. These various importance categories can assist a user to digest email in an organized manner. In a sequence, the user can check for official and serious business mail that may include critical information about the user's email account or privacy policies; then read mail from contacts in the user's address book; then read mail from senders on the user's safe list; then browse mail received from subscriptions; and finally process junk mail.

Email importance may be based on email content instead of type of sender. Content criteria may be used separately from sender importance criteria or in conjunction with sender importance criteria. For example, in one implementation newly received emails may be sorted into categories according to content without regard to the sending source. If the user has an interest in "race cars," for instance, then emails containing race car content will be given high importance and displayed with priority. In another implementation, both sender importance and content importance are used to sort email into displayable categories. For example, in one implementation, new emails are first categorized by importance of the sender, and then if the emails sorted into any one category reach a certain threshold number, then the emails in that category are further sorted by content so that within a category the most important emails are displayed first.

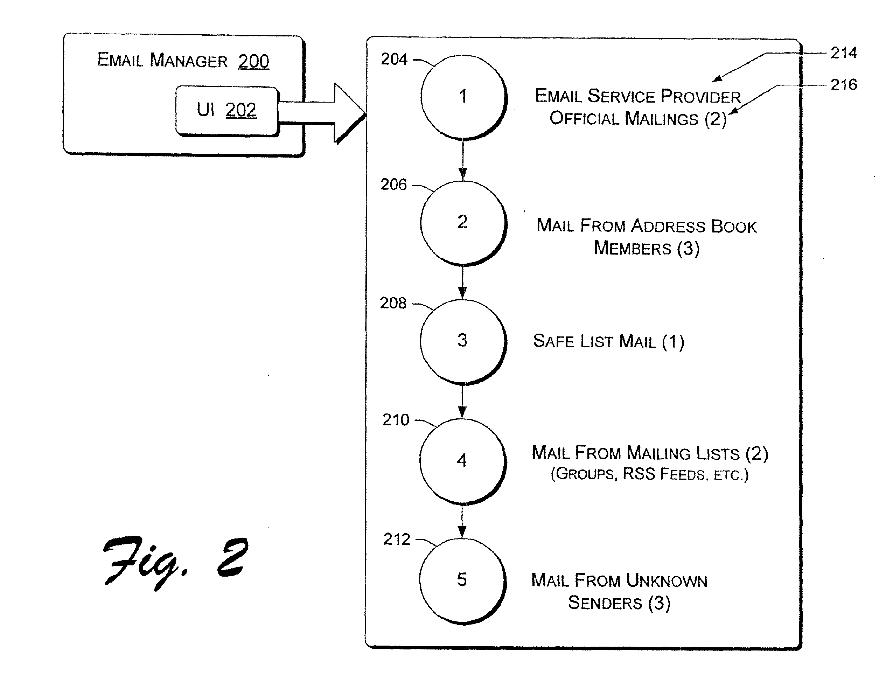

**Fig. 2** shows an exemplary email manager 200 that includes a user interface (UI) 202. In the illustrated implementation, the UI 202 presents the user with a flowchart-like interface, for example in a navigation pane to the side of a displayed email inbox 100, as in Fig. 1. The UI 202 guides the user through a hierarchical "tree" of importance categories in which the categories may be displayed in a prioritized order. In this example, there are five categories 204, 206, 208, 210, and 212 arranged in decreasing importance. Each importance category may have a descriptive heading (e.g., 214) that also shows the number of unread messages (e.g., 216) in each category. Here, the first category 204 is for official emails from the email service provider; the second category 206 is for emails from contacts in the user's personal address book; the third category 208 is for emails from entities on one of the user's safe lists; the fourth category 210 is for emails from senders on the user's mailing lists (subscriptions, newsfeeds, etc.); and the fifth category 212 is for "other" email including new contacts and junk mail. In one implementation, as the user progresses through the tree by clicking each node or by actuating a "next" button, the user is presented in the inbox 100 with a group of emails associated with the currently selected importance category.

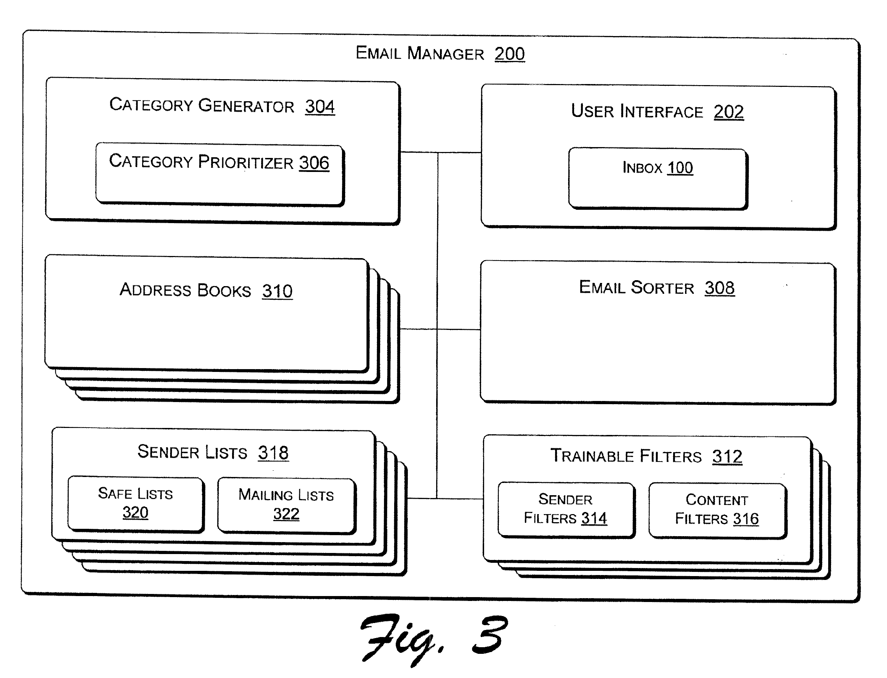

**Fig. 3** shows an exemplary email manager 200 in greater detail. It should be noted than an exemplary email manager 200 may be hardware, software, or a combination of both hardware and software. Besides a user interface, for example the UI 202 described above, other components are communicatively coupled as illustrated. A category generator 304 may be included to allow a user to select importance categories. Alternatively, importance categories may be preprogrammed. A category prioritizer 306 may be included to allow manual assignment of an order of priority to the importance categories. An email sorter 308 utilizes one or more address books 310 and/or trainable filters 312 to direct emails into importance categories. The trainable filters 312 may use numerous criteria to perform importance filtering. For example, the trainable filters 312 may include one or more sender filters 314 that direct email according to a sender's email address and/or may include one or more content filters 316 that direct email based on content in the body of an email or in a subject line. The email sorter 308 and the trainable filters 312 may also rely on sender lists 318 that may further include safe lists 320 and mailing lists 322, i.e., subscription lists, group lists, RSS feeds, etc.

In one implementation, an exemplary email manager 200 can be configured prior to use and further tuned and "trained" during ongoing use. A user can manually configure importance categories and the priority of their display, e.g., using the category generator 304 and the category prioritizer 306. A user may also manually designate email addresses from the address books 310, safe lists 320, and mailing lists 322 to be used as sorting criteria by the trainable filters 312. Thus user-selected addresses can function as rules for directing emails to the proper importance categories. Besides relying on pre-existing addresses from an address book 310 or a sender list 318, a UI 202 of an exemplary email manager 200 may also allow a user to directly enter or import new contact names, that is, email addresses of senders to be used in directing emails to proper importance categories.

In one implementation, when a user first attempts to open an exemplary email manager 200 the user is prompted to set up an account to increase usefulness. For example, by building the user's address books 310 and setting up email rules for the trainable filters 312 the user can increase the manageability of an ongoing email load. In other implementations, importance categories, priorities, and rules for the trainable filters 312 are predetermined or partly predetermined.

An exemplary email manager 200 can sometimes use existing tools of an email application to search a user's mailbox for addresses to add to the address book. The user may also be prompted to add frequent email senders to a safe list.

When content is used as a rule or criteria for directing email to importance categories, content filters 316 can work independently or in conjunction with sender filters 314, which are based on the importance of the sending source. For example, a user might turn off the sender filters 314 entirely and maintain an inbox that prioritizes new email in categories based solely on a designated content. If the user has designated "race car" content as important, then the most important category might contain email directly relating to "race cars" while the second most important categories might contain only references to "cars" or automotive topics.

Importance categories can also be designated according to multiple content topics. For example, "race cars" might be selected as the most important category, followed by "mortgage news," "world hunger," and "sailing." Such multiple content filtering can be used as the primary prioritization scheme to generate importance categories or can be used secondarily within a single category of another primary prioritization hierarchy, e.g., prioritization by importance of the sender.

A content filter 316 by which the email sorter 308 directs emails to importance categories can be a rule, criterion, condition, etc., or may possess more sophisticated characteristics. In one implementation, a content filter 316 prioritizes emails by performing a string search for the selected content on the subject line and/or the body of each email. For example, a user who subscribes to several racing car news feeds may select the word "racing" as a content criterion for directing emails to importance categories because the word "racing" will likely occur in numerous emails. However, a content filter 316 is not limited to a few lines of programming logic. In one implementation, a data mining software robot that uses hundreds of logic comparisons and artificial intelligence algorithms is used as a content filter 316 to distinguish junk mail, such as home equity loan advertisements, from valuable mail, such as a home equity account statement from a user's bank.

When the two types of trainable filters (i.e., 314 and 316) are combined, a user can sort email by sender and also by content. This can be accomplished simultaneously or in sequence. For example, a user can specify that incoming email be categorized by importance of sender, and then within one or more categories, sorted by importance of content. The latter sort by content is useful in importance categories that are likely to contain many emails. For example, a mailing list importance category 210 is likely to have a great number of emails with diverse content. An unknown senders importance category 212 is also likely to have a great number of emails with diverse content.

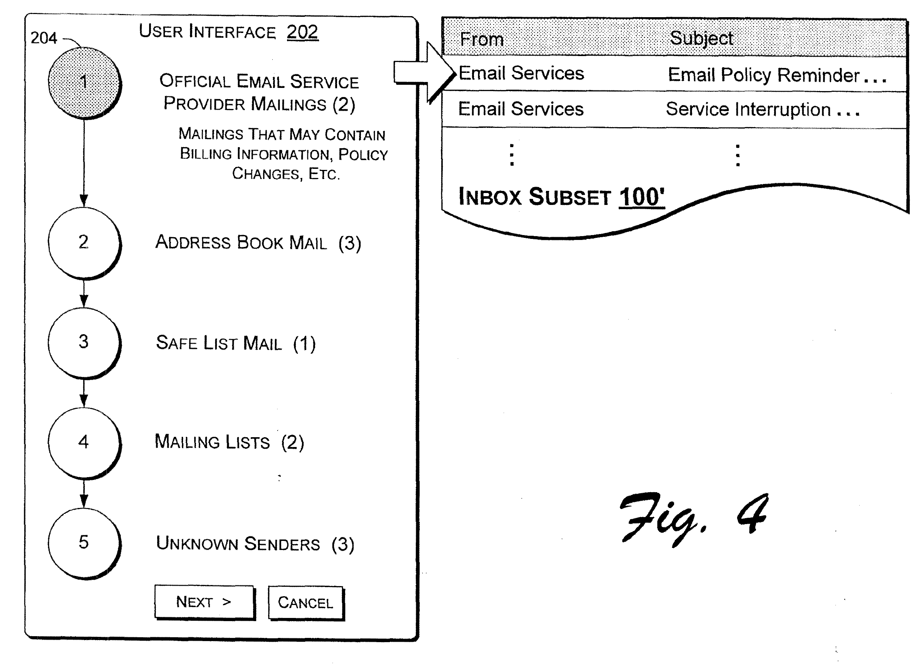

**Fig. 4** shows an exemplary UI 202 wherein a first or highest importance category is selected by a user or by default. An inbox subset 100' displays only emails associated with the first importance category 204. If the emails displayed in the first importance category 204 are not further sorted by an exemplary content filter 316, the emails may be sorted into a conventional sorting order, such as date received, alphabetic by sender, alphabetic by subject line, by conversation, etc. The user can also manually re-sort emails within a category.

A user can keep adding senders for inclusion in an importance category. For example, the user might decide to include billing reminders from credit cards, utility companies, etc., in the category of highest importance.

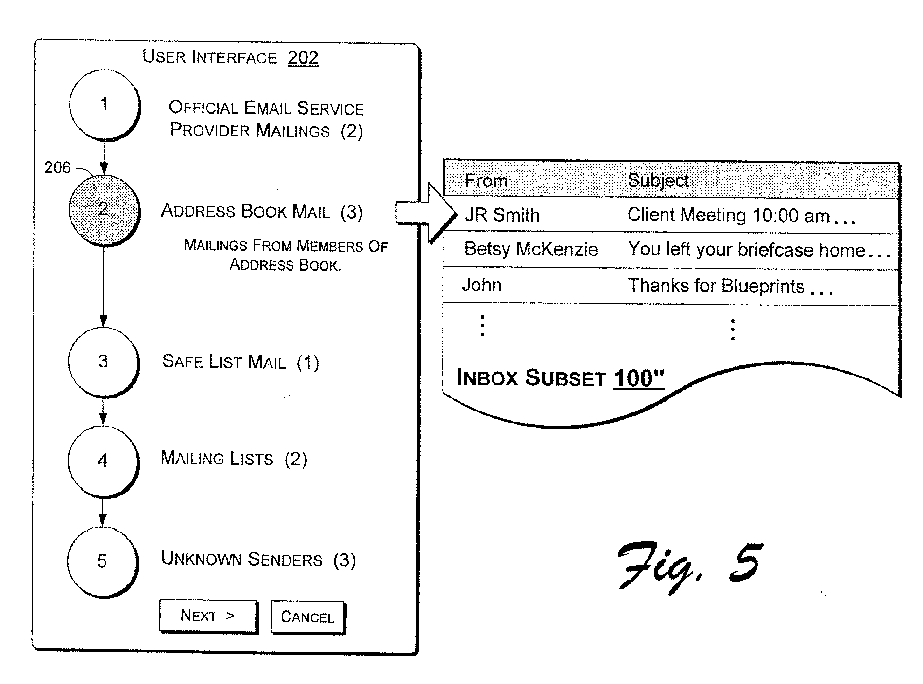

**Fig. 5** shows an exemplary UI 202 wherein a second highest importance category 206 is selected by a user. A corresponding inbox subset 100" displays only emails associated with the second importance category 206. Since the second highest importance category 206 in this implementation contains email from contacts in an address book 310, an exemplary email manager 200 may have mechanisms to prompt a user to maintain and update address books 310 and sender lists 318.

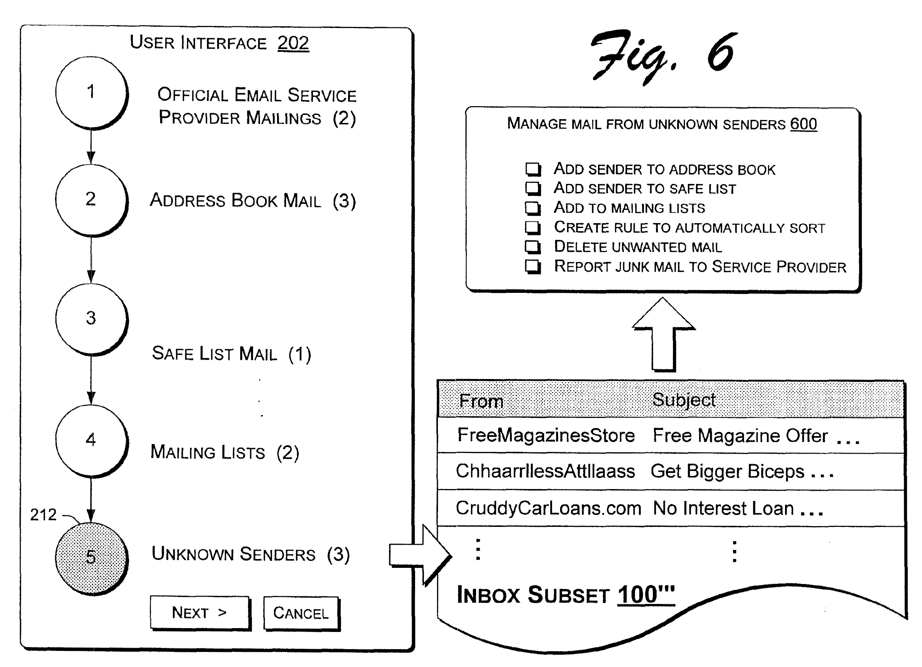

**Fig. 6** shows an exemplary UI 202 wherein a low importance category 212 of "unknown senders" is selected by a user. A corresponding inbox subset 100''' displays only emails associated with this importance category 212. Since the emails in this importance category 212 are from unrecognized senders, an exemplary email manager 200 may display an additional user interface 600 for processing this type of email. To manage mail from unknown senders the additional UI 600 may include options for processing a selected piece of email, such as adding the sender's address to an address book 310, adding the sender to a safe list 320, adding the sender to a mailing list 322, creating a rule for one of the trainable filters 312 to automatically sort mail from the sender, deleting the email as unwanted, and/or reporting junk mail to the email service provider, etc.

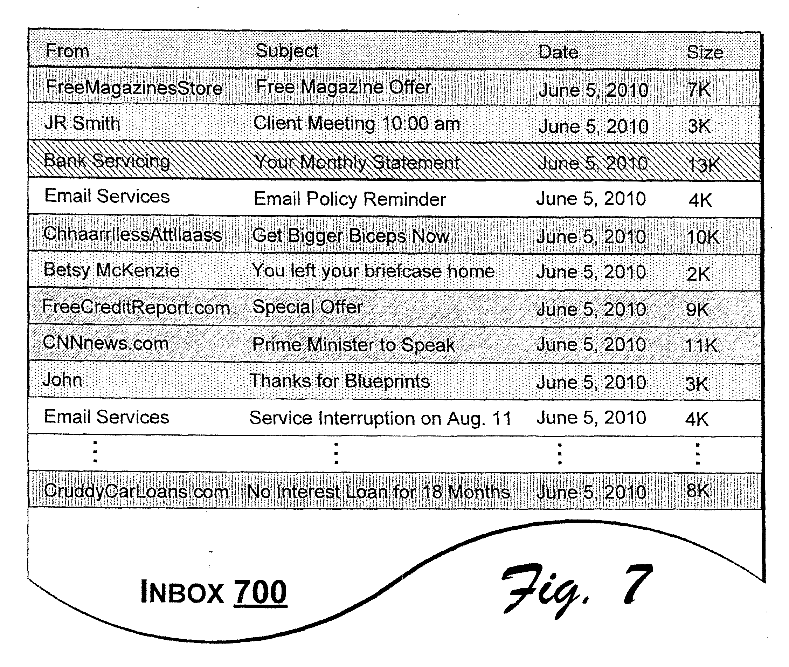

**Fig. 7** shows an alternative implementation of an inbox 700 generated and displayed by an exemplary email manager 200. Instead of displaying importance categories as discrete inbox subsets, each importance category is color coded. Emails associated with each importance category are also color coded with the corresponding color. In a monochromatic variation, emails of different importance are coded with different intensities of a single color. Emails from a hierarchy of importance categories are then displayed in an inbox 700 in a random order, such as the order received, but with the color coding. This alternative implementation may be suitable if the total number of new messages is typically not more than the number of email subject lines that can be displayed at once on a display screen.

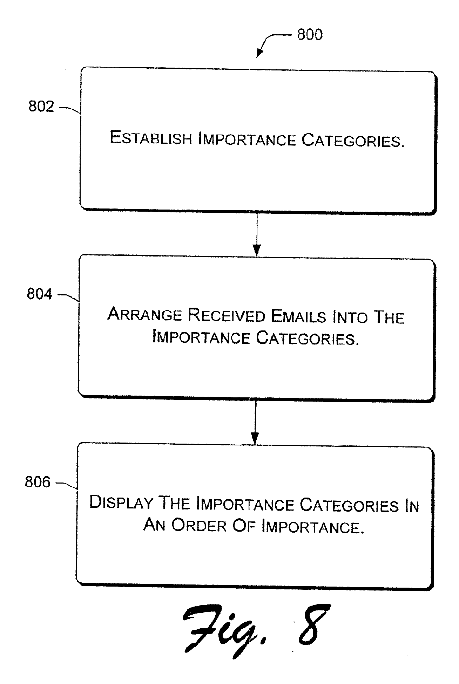

**Fig. 8** shows an exemplary method 800 of managing email. In the flow diagram, the operations are summarized in individual blocks. The method 800 may be performed by hardware, software, or by combinations of both, for example, by an exemplary email manager 200.

At block 802, importance categories for dividing incoming email into manageable segments are established. The importance categories, however, are united and immediately accessible to a user through a persistently accessible UI 202 that allows instant switching of display between categories. In one implementation, emails from multiple importance categories are shown on a user's display at once, if there are few enough emails. Otherwise, each importance category containing only associated emails is displayed one at a time for manageability.

Importance categories may be preprogrammed in some exemplary email managers 200 while other exemplary email managers 200 allow a user to manually select the importance categories and their relative priority.

At block 804, received emails are arranged into the importance categories. An email sorter 308 may utilize trainable filters 312 to direct incoming email to the various established importance categories. Since the trainable filters 312 are dynamic, new and additional sorting criteria can be added during ongoing use of an exemplary email manager 200. For example, an importance category relying on a user's address book 310 can scale to the changing size of the address book 310.

At block 806, the importance categories are displayed in an order of importance. For example, the importance categories may be displayed as a hierarchical tree UI 202, in which a user can select a node on the tree to display emails gathered under a particular importance category. The emails in any one given category may also be displayed in a secondary order of importance, e.g., prioritized according to a content criterion whereas the importance category in which the secondary sorting takes place may have been prioritized according to a different importance criterion.

### CONCLUSION

The subject matter described above can be implemented in hardware, in software, or in firmware, or in any combination of hardware, software, and firmware. In certain implementations, the subject matter may be described in the general context of computer-executable instructions, such as program modules, being executed by a computing device or communications device. Generally, program modules include routines, programs, objects, components, data structures, etc. that perform particular tasks or implement particular abstract data types. The subject matter can also be practiced in distributed communications environments where tasks are performed over wireless communication by remote processing devices that are linked through a communications network. In a wireless network, program modules may be located in both local and remote communications device storage media including memory storage devices.

The foregoing discussion describes exemplary email managers. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method, comprising:
directing received emails into importance categories established by an email recipient; and
displaying the importance categories in an order of importance, wherein the order is assigned by the email recipient.

2. The method as recited in claim 1, wherein each importance category is based on a different type of email sender.

3. The method as recited in claim 1, wherein each importance category is based on a content characteristic.

4. The method as recited in claim 1, wherein each importance category is based on a different type of email sender and emails within at least one of the importance categories are sorted according to a content characteristic.

5. The method as recited in claim 1, wherein each importance category is based on different types of email senders, including email service providers, address book members, safe list members, mailing list members, and unknown senders.

6. A method, comprising:
establishing importance categories for receiving email;
assigning a display attribute to each of the importance categories; and
displaying received email using the assigned display attributes.

7. The method as recited in claim 6, wherein the importance categories include email from email service providers, email from address book members, email from members of a safe list, email from members of a mailing list, and email from unknown senders.

8. The method as recited in claim 6, wherein the importance categories are based on degree of similarity of received email content to a predetermined content.

9. The method as recited in claim 6, wherein the display attributes include different colors for each importance category.

10. The method as recited in claim 6, wherein the display attributes include a different intensity of a single color for each importance category.

11. A method, comprising:
receiving an email;
assigning the email to an importance category based on at least one of a sender address or an email content; and
displaying the importance category within an email inbox, wherein the email assigned to the importance category is accessible from within the inbox.

12. The method as recited in claim 11, further comprising selecting multiple importance categories and assigning a priority of display to each importance category.

13. The method as recited in claim 11, wherein the importance categories include email from email service providers, email from address book members, email from members on a safe list, email from members of a mailing list, and email from unknown senders.

14. An email inbox, comprising:
received emails arrangable according to an importance of a sender or an importance of a content for each email, wherein importance is assigned by an email recipient; and
importance categories for grouping the received email according to at least one of a sender or content, wherein the importance categories are displayed in an order of importance established by the email recipient.

15. The email inbox as recited in claim 14, wherein emails arranged into each importance category are selectable by a selection device.

16. The email inbox as recited in claim 14, wherein emails associated with an importance category are not displayed until the associated importance category is selected using a selection device.

17. The email inbox as recited in claim 14, wherein the importance categories include email from email service providers, email from address book members, email from safe list members, email from mailing list members, and email from unknown senders.

18. A user interface, comprising:
a hierarchical tree display, wherein each node on the tree represents an importance category established by an email recipient for email;
a selection device to designate a node on the tree; and
an email display area to identify emails associated with the designated node.

19. The user interface as recited in claim 18, wherein the importance categories are based on a type of sender or a type of email content.

20. The user interface as recited in claim 18, wherein the hierarchical tree includes at least nodes for importance categories that include email service providers, address book members, safe list members, mailing list members, and unknown senders of email.

21. An email manager, comprising:
a category generator to create importance categories for email, wherein importance is selected by an email recipient;
a category prioritizer to assign a level of importance to each importance category;
an email sorter to assign each received email to an importance category; and
a user interface to display the importance categories according to importance and to allow selection of emails within importance categories.

22. The email manager as recited in claim 21, further comprising trainable filters to separate emails according to a sender address or an email content.

23. The email manager as recited in claim 21, wherein the importance categories include email service providers, address book members, safe list members, mailing list members, and unknown senders of email.

24. An email system, comprising:
means for receiving email;
means for displaying received email grouped according to importance; and
means for establishing the importance based on at least one of email senders or an email content.

25. The email system as recited in claim 24, further comprising means for establishing the importance based on email addresses of the email senders.

26. The email system as recited in claim 24, further comprising means for sorting email according to importance categories and means for consequently sorting emails in each importance category according to content.

27. The email system as recited in claim 24, further comprising means for creating and displaying importance categories.

28. The email system as recited in claim 24, wherein the importance categories include email from email service providers, email from address book members, email from senders on a safe list, email from senders on a mailing list, and email from unknown senders.

29. A computer readable medium containing instructions that are executable by a computer to perform actions, comprising:
establishing importance categories for email senders or email content;
associating an incoming email with one of the importance categories;
displaying the importance categories; and
allowing access to the email via the associated importance category.

30. The computer readable medium as recited in claim 29, further comprising establishing a separate importance category for each of email service providers, address book members, safe list members, mailing list members, and unknown senders.
